# EUROPEAN PATENT APPLICATION

(11) **EP 4 571 055 A1**
(43) Date of publication of application: **18.06.2025**
(21) Application number: 24210680.5
(22) Date of filing: 04.11.2024
(51) Int. Cl.: F01D 15/10, F01D 25/12, H02K 1/32, H02K 5/20, H02K 9/06

(54) **ELECTRIC MACHINE WITH COOLING PASSAGES**

(30) Priority: 12.12.2023 US 202318536925
(71) Applicant: GE Aviation Systems LLC, Grand Rapids, MI 49512 (US)
(72) Inventor: SINGHAL, Sumit, Grand Rapids, 49512 (US)
(74) Representative: Openshaw & Co.

(57) **Abstract**

An electric machine (14) comprises a housing (30) at least partially defining a chamber (70), a first fluid passage (54), and a second fluid passage (60), the second fluid passage (60) fluidly coupled with the chamber (70); a rotor (32) disposed in the housing (30) and having a third fluid passage (84) fluidly coupled with the chamber (70); and an impeller (140) disposed at least partially in the chamber (70) and coupled with the rotor (32).

## Description

### TECHNICAL FIELD

The disclosure relates to a method and apparatus for operating an electrical machine and more specifically to operating the electrical machine in response to a varying power demand.

### BACKGROUND

Electrical machines, which can include electrical generators, are used in energy conversion. In the aircraft industry, an electrical machine can be mechanically coupled to a source of rotation, such as a mechanical or electrical machine, which for some aircraft may include a gas turbine engine. The generator can convert the mechanical energy of rotation into electrical energy.

### BRIEF DESCRIPTION OF THE DRAWINGS

In the drawings:
FIG. 1 is a perspective view of an engine, an accessory gearbox (AGB), and an electrical machine, in accordance with various aspects described herein.
FIG. 2 is a perspective view of an electrical machine in accordance with various aspects described herein.
FIG. 3 is a cross-sectional view of an electrical machine in accordance with various aspects described herein.
FIG. 4 is an enlarged portion of FIG. 3.
FIG. 5 is a perspective view of a second nozzle of an electric machine in accordance with various aspects described herein.
FIG. 6 is a cross-sectional perspective view of a second nozzle of an electric machine in accordance with various aspects described herein.
FIG. 7 is a perspective view of a cap of an electric machine in accordance with various aspects described herein.
FIG. 8 is a schematic view of an aircraft, including an engine, an accessory gearbox (AGB), and an electrical machine, in accordance with various aspects described herein.
FIG. 9 is a flow diagram of a method of operating an aircraft in accordance with various aspects described herein.

### DETAILED DESCRIPTION

Aspects of the present disclosure are described herein in the context of an electric machine of an aircraft, which enables production of electrical power from an energy source such as a turbine engine, jet fuel, hydrogen, batteries, etc. However, it will be understood that the disclosure is not so limited and has general applicability to power distribution systems or power generation systems in non-aircraft applications, including other mobile applications and non-mobile industrial, commercial, and residential applications. For example, applicable mobile environments can include an aircraft, spacecraft, space-launch vehicle, satellite, locomotive, automobile, etc. Commercial environments can include manufacturing facilities or power generation and distribution facilities or infrastructure.

Electric machines can be designed, sized, or otherwise controllable to generate an estimated, determined, predicted, or otherwise expected amount or quantity of electrical power to provide to a set of electrical loads. It may be desirable to flow cooling fluid through one or more portions of the electrical machine to provide cooling. The size, the weight, or both, of the electric machine can be reduced relative to other designs by providing cooling fluid from an external source, such as a pump of an accessory gearbox (AGB) that may be operably and fluidly coupled with the electric machine.

As used herein, the term "set" or a "set" of elements can be any number of elements, including only one.

All directional references (e.g., radial, axial, upper, lower, upward, downward, left, right, lateral, front, back, top, bottom, above, below, vertical, horizontal, clockwise, counterclockwise) that may be used herein are only used for identification purposes to aid the reader's understanding of the disclosure, and do not create limitations, particularly as to the position, orientation, or use thereof. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. In non-limiting examples, connections or disconnections can be selectively configured to provide, enable, disable, or the like, an electrical connection between respective elements. Non-limiting example electric machine connections or disconnections can be enabled or operated by way of switching, bus tie logic, or any other connectors configured to enable or disable the energizing of electrical loads downstream of the bus. Additionally, as used herein, "electrical connection" or "electrically coupled" can include a wired or wireless connection, or both. The exemplary drawings are for purposes of illustration only and the dimensions, positions, order and relative sizes reflected in the drawings attached hereto can vary.

A fluid passage can include various forms, including being integrally formed with another component (e.g., via an aperture in a housing, a shaft, etc.), provided in a separate component (e.g., a tube, a hose, a pipe, etc.), or a combination thereof.

Additionally, as used herein, a "controller" or "controller module" can include a component configured or adapted to provide instruction, control, operation, or any form of communication for operable components to effect the operation thereof. A controller can include any known processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), proportional resonant controller (PR), a hardware-accelerated logic controller (e.g. for encoding, decoding, transcoding, etc.), the like, or a combination thereof. Non-limiting examples of a controller can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller can also include a data storage component accessible by the processor, including memory, whether transient, volatile or non-transient, or non-volatile memory.

Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein. In another non-limiting example, a controller can be configured for comparing a first value with a second value, and operating and controlling operations of additional components based on the satisfying of that comparison. For example, when a sensed, measured, or provided value is compared with another value, including a stored or predetermined value, the satisfaction of that comparison can result in actions, functions, or operations controllable by the controller. As used, the term "satisfies" or "satisfaction" of the comparison is used herein to mean that the first value satisfies the second value, such as being equal to or less than the second value, or being within the value range of the second value. It will be understood that such a determination may easily be altered to be satisfied by a positive/negative comparison or a true/false comparison. Example comparisons can include comparing a sensed or measured value to a threshold value or threshold value range.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Aspects of the disclosure can be implemented in any environment using an electric machine or power generator. Further, while this description is primarily directed toward an aircraft environment, aspects of the disclosure are applicable in any environment using an electrical machine.

The exemplary drawings are for purposes of illustration only and the dimensions, positions, order and relative sizes reflected in the drawings attached hereto can vary.

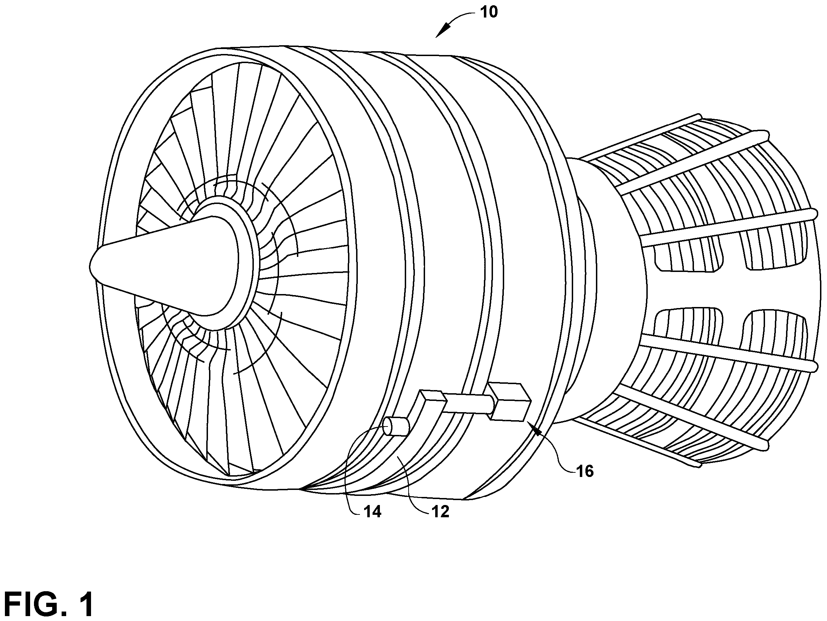

FIG. 1 illustrates an engine 10 (e.g., a gas turbine engine) having an accessory gear box (AGB) 12 and an electric machine 14 according to an aspect of the disclosure. The engine 10 can be a turbofan engine, such as a General Electric GEnx or CF6 series engine, used in modern aviation, or it could be a variety of other known gas turbine engines such as a turboprop or turboshaft. The AGB 12 can be coupled to the engine 10 by way of a mechanical power take off 16. The type and specifics of the engine 10 are not germane to the disclosure and will not be described further herein. The electric machine 14 can include one or more of a generator, motor, starter/generator, of combination thereof, and is not limited to generator aspects that can provide electrical power. For instance, in one non-limiting example, the electric machine 14 can operate in a power generation mode to provide power, or in a motor mode, wherein power is consumed to generate rotational force, such as propulsion. Non-limiting examples of the electric machine 14 can include synchronous or asynchronous machine architectures.

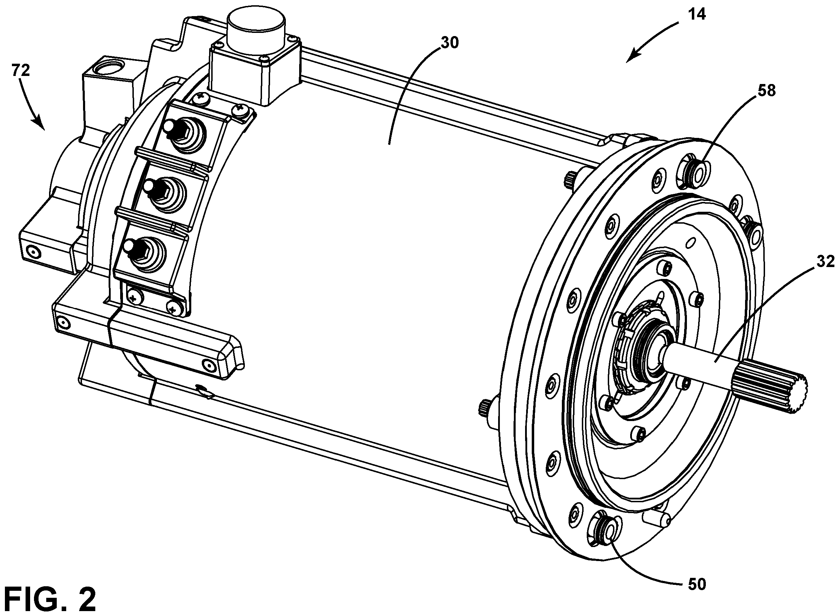

Referring to FIG. 2, the electric machine 14 can a housing 30 (e.g., a stator) and a rotor 32 disposed at least partially in the housing 30. The rotor 32 can be configured for coupling with AGB 12 (FIG. 1) to cause rotation of the rotor 32. Rotation of the rotor 32 relative to the housing 30 can generate electrical power. Providing electrical power to the electric machine 14 can cause rotation of the rotor 32 relative to the housing 30. The rotor 32 is operably coupled with a mechanical power source, such as the engine 10 via the AGB 12 (FIG. 1) operably coupled with the engine 10 via the power take off 16. For example, operation of the engine 10 can rotate one or more portions of the power take off 16 (FIG. 1), which can rotate one or more portions of the AGB 12 (FIG. 1), which can then rotate the rotor 32 to generate electrical power.

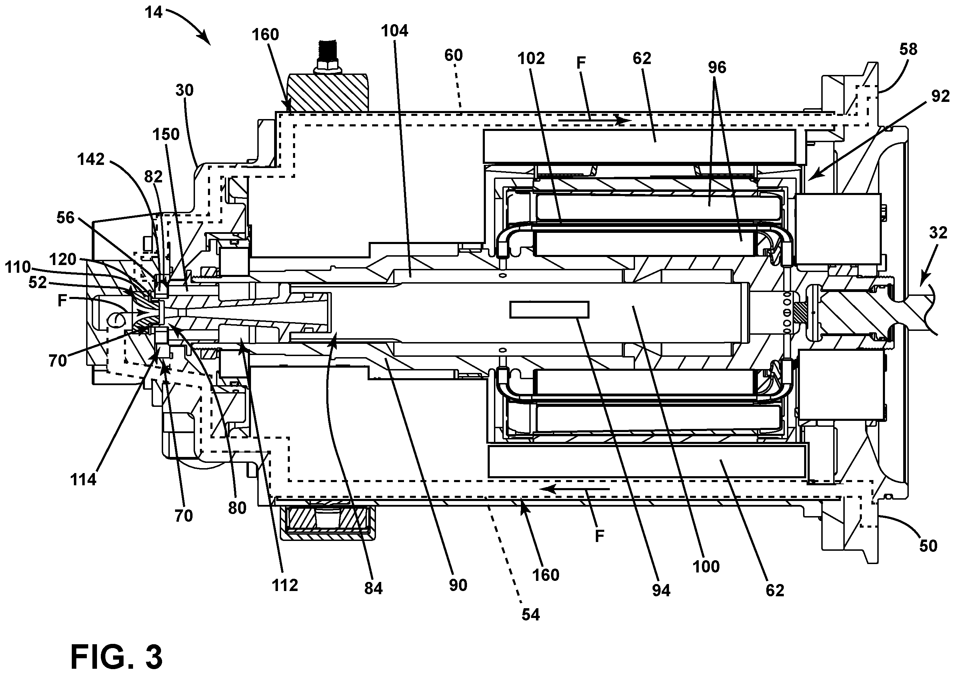

As generally illustrated in FIG. 3, the electric machine 14 includes a first inlet 50, a first outlet 52, a second inlet 56, and a second outlet 58. The housing 30 at least partially defines a first fluid passage 54 fluidly coupling the first inlet 50 and the first outlet 52, and a defines a second fluid passage 60 fluidly coupling the second inlet 56 and the second outlet 58. The housing 30 at least partially defines a chamber 70 (e.g., a fluid chamber). The first outlet 52 and the second inlet 56 are fluidly coupled with the chamber 70. The first inlet 50 and the second outlet 58 are fluidly coupled with an exterior of the housing 30. The housing 30 can include one or more electrical components 62, such as a plurality of coils. One or both of the first fluid passage 54 or the second fluid passage 60 can extend adjacent to, through, or both, the one or more electrical components 62, such as to cool the one or more electrical components 62, such as via the flow of a cooling fluid F.

The housing 30 can include a cap 72 that can be connected to an end of the housing 30. The cap 72 can at least partially define the chamber 70, define a portion of the first fluid passage 54, at least partially receive a first nozzle 110, define a portion of the second fluid passage 60, define the second inlet 56, or a combination thereof. The cap 72 may be connected to other portions of the housing 30, such as after the rotor 32 is disposed in the housing 30.

The rotor 32 includes a third inlet 80 and a third outlet 82. The rotor 32 at least partially defines a third fluid passage 84 fluidly coupling the third inlet 80 with the third outlet 82. The rotor 32 includes a rotor shaft 90 and a rotor body 92 coupled to rotate with the rotor shaft 90. The rotor shaft 90 can include one more electrical components 94, such as a rectifier, that can be disposed in, adjacent to, or both, the third fluid passage 84. The rotor body 92 can include, for example, one or more coils or windings 96. The third fluid passage 84 can include a first portion 100, a second portion 102, and a third portion 104. The first portion 100 can extends in the rotor shaft 90, such as from the second nozzle 112 and the third inlet 80 to the second portion 102. The second portion 102 can extend from the first portion 100 through the rotor body 92 to the third portion 104. For example, the second portion 102 can extend adjacent to, through, or both, the one or more coils or windings 96. The third portion 104 can extend from the second portion 102 through the rotor shaft 90 to the third outlet 82, such as to one or more outlet portions 150 of the third outlet 82, which may be defined by the second nozzle 112. The third portion 104 can be disposed radially outward of the first portion 100. The third portion 104 can be disposed in the rotor shaft 90. The third fluid passage 84 can, for example, function as a fluid loop through the rotor 32.

The electric machine 14 includes the first nozzle 110 and a second nozzle 112. The first nozzle 110 is coupled with the housing 30, defines the first outlet 52, and is fluidly coupled with the first fluid passage 54. The second nozzle 112 is coupled with the rotor 32, is at least partially aligned with the first nozzle 110, defines the third inlet 80, and is fluidly coupled with the third fluid passage 84. The first nozzle 110, the second nozzle 112, or both, can be partially disposed in the chamber 70.

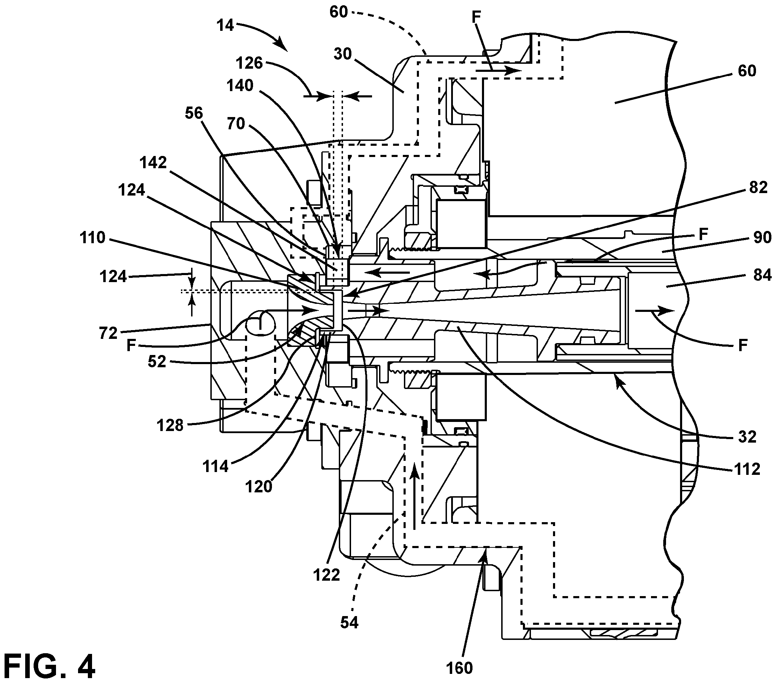

Referring to FIG. 4, the first nozzle 110 is fluidly coupled with the second nozzle 112 via a non-contact interface 114. For example, the second nozzle 112 can include a sleeve 120 disposed at least partially in the chamber 70 and a shoulder 122 disposed at an inner axial end of the sleeve 120. A portion of the first nozzle 110 can be disposed in the sleeve 120 such that a radial gap 124 is present between the inner surface of the sleeve 120 and the outer surface of the first nozzle 110, and such that the first nozzle 110 and the second nozzle 112 partially overlap in the radial direction. Additionally or alternatively, the axial end 128 of the first nozzle 110 (e.g., closest to the second nozzle 112) can be axially offset from the shoulder 122 such that an axial gap 126 is present between portions of the first nozzle 110 and the second nozzle 112. The first nozzle 110 can include a converging configuration in which the inner diameter (e.g., the hydraulic diameter) of the first nozzle 110 decreases toward the second nozzle 112. The second nozzle 112 can include a converging-diverging configuration in which the inner diameter (e.g., the hydraulic diameter) of the second nozzle 112 first decreases away from the first nozzle 110 and then increases.

The electric machine 14 can include an impeller 140 that is disposed at least partially in the chamber 70. The impeller 140 can be coupled to or integrally formed with the rotor 32 such that the impeller 140 rotates with the rotor 32. The impeller 140 includes a set of impeller blades 142 that extend from an outer surface of the sleeve 120 and are disposed at least partially in the chamber 70. The impeller 140 can be disposed such that the impeller 140 (e.g., the set of impeller blades 142) and the first nozzle 110 at least partially overlap in the radial direction.

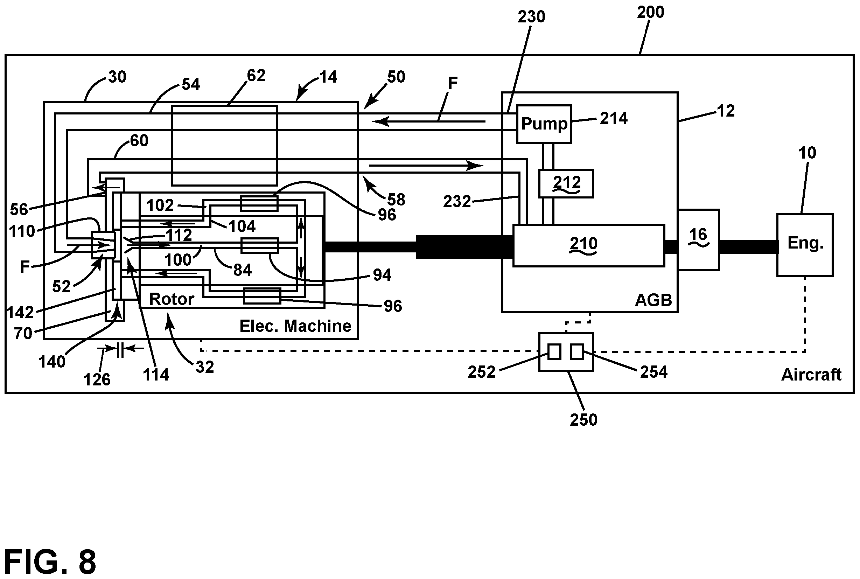

The electric machine 14 can include a flow path 160 for fluid (e.g., the cooling fluid F) to flow through the electric machine 14, such as to cool one or more portions thereof. The flow path 160 can, for example, extend from the first inlet 50, through the first fluid passage 54 to the first nozzle 110 and the first outlet 52, across the non-contact interface 114 into the second nozzle 112 and the third inlet 80, through the first portion 100 and the rotor shaft 90, through the second portion 102 and the rotor body 92, through the third portion 104 to the third outlet 82, the outlet portions 150, and the second nozzle 112, into the chamber 70, into the second inlet 56, through the second fluid passage 60, and out of the housing 30 and the electric machine 14 to an exterior of the housing 30 through the second outlet 58. The flow path 160 can include other configurations, and may, for example, include portions of the AGB 12 (see, e.g., FIG. 8).

While the first fluid passage 54 is shown toward the top of the page and the second fluid passage 60 is shown toward the bottom of the page in FIGS. 3 and 4, the first and second fluid passages 54, 60, and the corresponding first and second inlets 50, 56 and first and second outlets 52, 58, can be disposed at a variety of locations of the electric machine 14. For example and without limitation, in some configurations, the first fluid passage 54 can be disposed in a top half of the housing 30, the second fluid passage 60 can be disposed in a bottom half of the housing 30, or a combination thereof. In some other configurations, the first fluid passage 54 can be disposed in the bottom half of the housing 30, the second fluid passage 60 can be disposed in the top half of the housing 30, or a combination thereof.

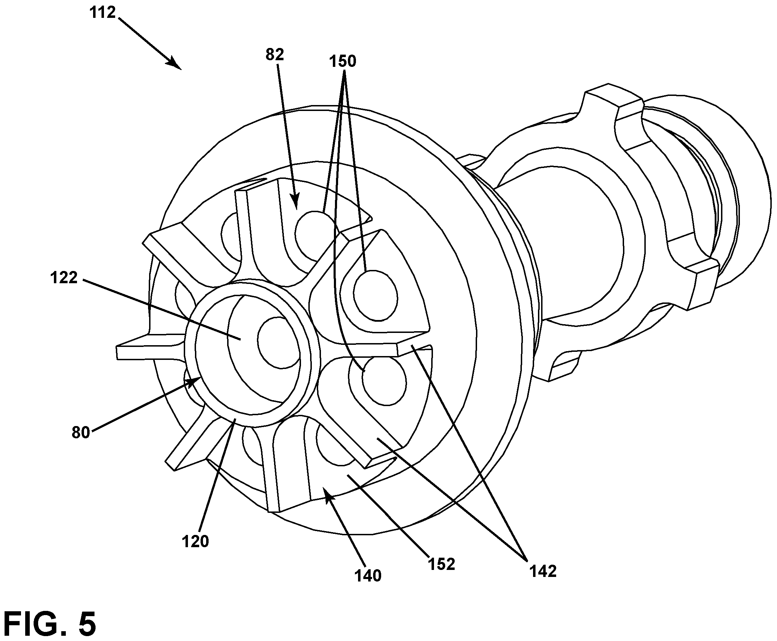

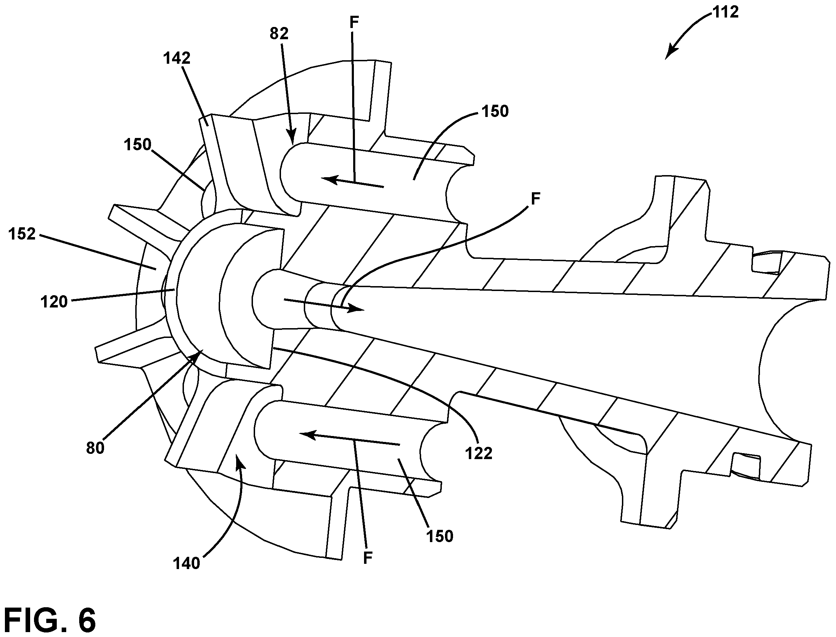

Referring to FIGS. 5 and 6, perspective and cross-sectional views, respectively, illustrate an example of the second nozzle 112. The third outlet 82 can include a plurality of separate outlet portions 150 that can be circumferentially spaced, equally or unequally, at an axial surface 152 of the second nozzle 112. The outlet portions 150 can be fluidly coupled to the third fluid passage 84 (FIG. 4). The set of impeller blades 142 can extend from the axial surface 152 and some or each of the plurality of outlet portions 150 can be disposed between respective adjacent pairs of the set of impeller blades 142. For example and without limitation, the set of impeller blades 142 can include eight impeller blades and the plurality of outlet portions 150 can include eight outlet portions. As the impeller 140 rotates with the rotor 32 (FIG. 4), the set of impeller blades 142 can move the cooling fluid F in the chamber 70 (FIG. 4), including the cooling fluid F exiting the third outlet 82 and the outlet portions 150 thereof. For example, the set of impeller blades 142 can move the cooling fluid F in the chamber 70 (FIG. 4) toward and into the second inlet 56 (FIG. 4). The movement of the cooling fluid F caused by the set of impeller blades 142 can be sufficient to push the fluid through the second fluid passage 60 (FIG. 4) to the second outlet 58 (FIG. 4) and out of the electric machine 14 (FIG. 4).

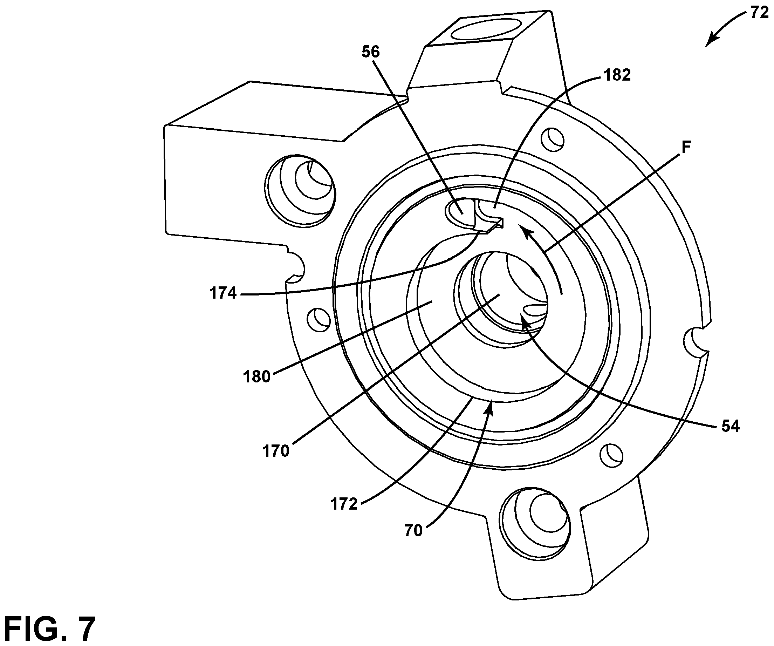

Referring to FIG. 7, a perspective view of the cap 72 is provided. The cap 72 can include a first recess 170 that partially defines the first fluid passage 54 and that at least partially receives the first nozzle 110 (FIG. 4). The first recess 170 can, for example, be cylindrical, concentric with the rotor 32 (FIG. 4), or both. The cap 72 can include a second recess 172. The first recess 170 may extend from the second recess 172 such that the first recess 170 is axially outward of the second recess 172 in an assembled configuration. The second recess 172 may at least partially define the chamber 70 such that some or all of the impeller 140 (FIG. 4) can be disposed in the second recess 172, in the assembled configuration. For example, a minimum inner diameter of the second recess 172 can be larger than the outer diameter of the impeller 140 (FIG. 4). The second recess 172 can include a protrusion 174 that extends generally in the circumferential direction and separates a first portion 180 of the second recess 172 and a second portion 182 of the second recess 172. For example, the protrusion 174 can function as a cutwater portion. The second portion 182 can be radially outward of the first portion 180 and can be fluidly coupled with the second inlet 56. In some implementations, the cooling fluid F that enters the chamber 70 may enter the first portion 180 of the second recess 172, the impeller 140 (FIG. 4) may move the cooling fluid F within the first portion 180, and as the fluid contacts the protrusion 174, at least some of the fluid flows into the second portion 182 and into the second inlet 56. The second inlet 56 can, for example, be angled relative to (e.g., not parallel with) the circumferential direction, the axial direction, the radial direction, or a combination thereof.

Referring to FIG. 8, a schematic of an aircraft 200 is illustrated with the engine 10, the AGB 12, and the electric machine 14. The engine 10 can be coupled to the take off 16 to cause rotation of one or more portions of the AGB 12, such as a set of gears 210 of the AGB 12. The AGB 12 can rotate the rotor 32, such as via the set of gears 210. The AGB 12 can include a reservoir 212 for cooling fluid F and a pump 214 for cooling fluid F. The pump 214 can pump the cooling fluid F to the set of gears 210, to the electric machine 14, or both. The cooling fluid F provided to the set of gears 210 can cool, lubricate, or both, the set of gears 210.

The pump 214 can be fluidly coupled with the electric machine 14, such as with the first inlet 50, the second outlet 58, or both. For example, the AGB 12 can include a first AGB fluid passage 230 that is fluidly coupled with the pump 214, and operation of the pump 214 can provide fluid through the first AGB fluid passage 230 to the first inlet 50 and through the first fluid passage 54 to the first outlet 52 and the first nozzle 110. The fluid pressure or velocity provided via the pump 214 can be sufficient such that cooling fluid F that reaches and then exits the first nozzle 110 flows across the non-contact interface 114 (e.g., across the axial gap 126) and into the second nozzle 112. The cooling fluid F can continue to flow through the third fluid passage 84 and into the chamber 70. The impeller 140 can push the cooling fluid F into the second inlet 56, through the second fluid passage 60, and out of the electric machine 14 via the second outlet 58. The cooling fluid F may then flow into the AGB 12, such as into a second AGB fluid passage 232 fluidly coupled with the second fluid passage 60 via the second outlet 58. At least a portion of the cooling fluid F received in the second AGB fluid passage 232 can be provided to the set of gears 210 for lubrication. The cooling fluid F returning to the AGB 12 from the electric machine 14 can have a higher temperature than the cooling fluid F provided to the electric machine 14 (e.g., as a result of cooling portions of the electric machine 14), but the increased temperature may not materially affect the utility of the cooling fluid F for lubricating the AGB 12 (e.g., the set of gears 210). One or more other portions of the returned cooling fluid F can be provided to the reservoir 212 or other portions of the AGB 12, such as for cooling, lubrication, or a combination thereof.

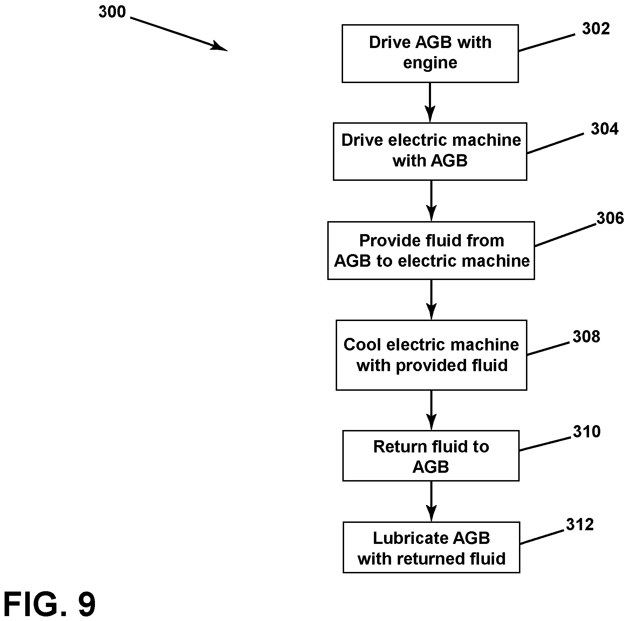

Referring to FIG. 9, a method 300 of operating an aircraft, such as the aircraft 200 with the engine 10, the AGB 12, and the electric machine 14 of FIG. 8, is illustrated. The method 300 includes driving the AGB 12 with the engine 10 (block 302) and driving the electric machine 14 with the AGB 12 (block 304), such as to generate electrical power. The method 300 includes providing (e.g., pumping) cooling fluid F from the AGB 12 (block 306), such as from the reservoir 212 via the pump 214, to the electric machine 14, such as to the first inlet 50. The method 300 can include cooling the electric machine 14, such as one or more portions of the housing 30, the rotor 32, or both, with the cooling fluid F from the AGB 12 (block 308). The method 300 can include returning the cooling fluid F to the AGB 12 (block 310), such as via the impeller 140 pushing the cooling fluid F through the second fluid passage 60 and into the second AGB fluid passage 232. The method 300 can include lubricating the AGB 12 (block 312), such as with the cooling fluid F returned from the electric machine 14, cooling fluid F from the pump 214, or both.

Referring again to FIG. 8, the aircraft 200 can include a controller 250 that can include a processor 252 and a memory 254, among other components. The controller 250 can be operably coupled with and/or at least partially control operation of the engine 10, the AGB 12, the electric machine 14, or a combination thereof. For example, the controller 250 can control operation of the engine 10, the AGB 12, and the electric machine 14 to carry out the method 300, which can include operating the pump 214 to provide sufficient flow of the cooling fluid F to cool the electric machine 14 and lubricate the AGB 12 with the cooling fluid F returned from the electric machine 14.

With some implementations, the electric machine 14 is a dry cavity machine. Additionally or alternatively, the electric machine 14, including the housing 30, is devoid of a pump. An engine assembly (e.g., a gas turbine engine assembly) can include the engine 10, the AGB 12, and the electric machine 14. The aircraft 200 can include the engine assembly.

Further aspects of the disclosure are provided by the subject matter of the following clauses:

An electric machine, comprising: a housing at least partially defining a chamber; a rotor disposed in the housing; and an impeller disposed at least partially in the chamber and coupled with the rotor.

The electric machine of any preceding clause wherein the housing at least partially defines a first fluid passage and a second fluid passage, the second fluid passage fluidly coupled with the chamber; wherein the rotor has a third fluid passage fluidly coupled with the chamber; and wherein the electric machine further comprises: a first nozzle coupled with the housing and fluidly coupled with the first fluid passage; a first outlet defined by the first nozzle; a first inlet fluidly coupled with the first fluid passage; a second inlet and a second outlet fluidly coupled with the second fluid passage; and a second nozzle coupled with the rotor, at least partially aligned with the first nozzle, and defining a third inlet fluidly coupled with the third fluid passage; wherein the first nozzle is fluidly coupled with the second nozzle via a non-contact interface.

The electric machine of any preceding clause, wherein the first nozzle and the second nozzle partially overlap in a radial direction.

The electric machine of any preceding clause, wherein the first nozzle and the impeller partially overlap in the radial direction.

The electric machine of any preceding clause, wherein the first nozzle includes a converging configuration; and wherein the second nozzle includes a converging-diverging configuration.

The electric machine of any preceding clause, wherein the second nozzle includes a sleeve disposed at least partially in the chamber; and a portion of the first nozzle is disposed in the sleeve.

The electric machine of any preceding clause, wherein the impeller includes a set of blades extending from an outer surface of the sleeve and disposed in the chamber.

The electric machine of any preceding clause, wherein the housing at least partially defines a first fluid passage and a second fluid passage, the second fluid passage fluidly coupled with the chamber; wherein the rotor has a third fluid passage fluidly coupled with the chamber; and wherein a fluid path extends through the first fluid passage to the third fluid passage, through the third fluid passage to the chamber, from the chamber to the second fluid passage, and from the second fluid passage to an exterior of the housing.

The electric machine of any preceding clause, wherein the rotor includes a rectifier disposed in or adjacent to the third fluid passage.

The electric machine of any preceding clause, further comprising a plurality of coils disposed in the housing; wherein the first fluid passage extends adjacent to the plurality of coils.

The electric machine of any preceding clause, wherein the housing at least partially defines a first fluid passage and a second fluid passage, the second fluid passage fluidly coupled with the chamber; wherein the rotor has a third fluid passage fluidly coupled with the chamber; and wherein the electric machine further comprises: a first inlet and a first outlet fluidly coupled with the first fluid passage; a second inlet and a second outlet fluidly coupled with the second fluid passage; and a third inlet and a third outlet fluidly coupled with the third fluid passage; wherein the rotor includes a rotor shaft and a rotor body coupled to the rotor shaft; wherein the third fluid passage includes a first portion, a second portion, and a third portion; wherein the first portion extends from the third inlet through the rotor shaft to the second portion; wherein the second portion extends through the rotor body to the third portion; and wherein the third portion extends from the second portion through the rotor shaft to the third outlet.

The electric machine of any preceding clause, wherein the third portion is disposed radially outward of the first portion.

The electric machine of any preceding clause, wherein the impeller includes a plurality of circumferentially spaced blades; and wherein the third outlet is disposed between an adjacent pair of the plurality of circumferentially spaced blades.

The electric machine of any preceding clause, wherein the impeller is mounted on or integrally formed with the rotor shaft; and the impeller is configured to push fluid into the second inlet and through the second fluid passage to an exterior of the housing.

The electric machine of any preceding clause, wherein the housing is devoid of a pump.

An assembly for an aircraft, the assembly comprising: the electric machine of any preceding clause, the housing of the electric machine at least partially defining a first fluid passage; and an accessory gearbox (AGB) mechanically coupled to drive the electric machine, the AGB comprising: a pump; and an AGB fluid passage fluidly coupled with the pump; wherein the AGB fluid passage is fluidly coupled with the first fluid passage of the electric machine.

The assembly of any preceding clause, wherein the housing of the electric machine at least partially defines a second fluid passage the AGB includes a second AGB fluid passage fluidly coupled with the second fluid passage of the electric machine.

A method of operating an aircraft, the method comprising: driving an accessory gearbox (AGB) with an engine; driving an electric machine with the AGB; providing fluid from the AGB to the electric machine; cooling the electric machine with the fluid from the AGB; and returning the fluid from the electric machine to the AGB.

The method of any preceding clause, further comprising lubricating the AGB with the fluid returned from the electric machine.

The method of any preceding clause, wherein returning the fluid from the electric machine to the AGB includes an impeller coupled to a rotor shaft of the electric machine pushing the fluid through a fluid passage of the electric machine.

The electric machine of any preceding clause, wherein the electric machine is a dry cavity machine.

A gas turbine engine assembly comprising the electric machine of any preceding clause.

A gas turbine engine assembly comprising the assembly of any preceding clause.

An aircraft comprising the electric machine of any preceding clause.

An aircraft comprising the gas turbine engine assembly of any preceding clause.

An electronic controller including a processor and a memory, wherein the electronic controller is configured to conduct the method of any preceding clause.

An electronic controller including a processor and a memory, wherein the electronic controller is configured to operate the electric machine of any preceding clause.

An electronic controller including a processor and a memory, wherein the electronic controller is configured to operate the gas turbine engine of any preceding clause.

The electronic controller of any preceding clause, wherein operating the gas turbine engine includes driving an accessory gearbox (AGB) with an engine; driving an electric machine with the AGB; providing fluid from the AGB to the electric machine; cooling the electric machine with the fluid from the AGB; and returning the fluid from the electric machine to the AGB.

The electronic controller of any preceding clause, wherein operating the gas turbine engine includes lubricating the AGB with the fluid returned from the electric machine.

The electronic controller of any preceding clause, wherein returning the fluid from the electric machine to the AGB includes an impeller coupled to a rotor shaft of the electric machine pushing the fluid through a fluid passage of the electric machine.

An electronic controller including a processor and a memory, wherein the electronic controller is configured to operate the assembly of any preceding clause.

An electronic controller including a processor and a memory, wherein the electronic controller is configured to operate the aircraft of any preceding clause.

A non-transitory computer readable medium comprising instructions that, when executed, cause a processor to conduct the method of any preceding clause.

A non-transitory computer readable medium comprising instructions that, when executed, cause a processor to operate the electric machine of any preceding clause.

A non-transitory computer readable medium comprising instructions that, when executed, cause a processor to operate the gas turbine engine of any preceding clause.

A non-transitory computer readable medium comprising instructions that, when executed, cause a processor to operate the assembly of any preceding clause.

A non-transitory computer readable medium comprising instructions that, when executed, cause a processor to operate the aircraft of any preceding clause.

An aircraft comprising at least one of the electric machine, the electronic controller, the assembly, the gas turbine engine, or the non-transitory computer readable medium of any preceding clause.

While aspects of the disclosure are shown in an aircraft environment, the disclosure is not so limited and can have applicability in a variety of environments.

The drawings illustrate non-limiting examples of electric machines and portions thereof, and additional components, such as power distribution nodes, converters, power protection components, and the like, can be included in the electrical machines, but are not shown or described, for brevity.

The sequences described in this disclosure are for understanding purposes only and is not meant to limit aspects of the disclosure or the applicable methods of applying aspects of the disclosure in any way as it is understood that the portions of the method can proceed in a different logical order, additional or intervening portions can be included, or described portions of the method can be divided into multiple portions, or described portions of the method can be omitted without detracting from the described method.

Many other possible aspects and configurations in addition to that shown in the above figures are contemplated by the present disclosure. Aspects disclosed herein include an electrical machine with an induction generator and a converter in parallel, and the induction generator can switch between absorbing and supplementing the output of the induction generator output to compensate for changing power demands. The technical effect is that the above-described aspects enable faster responses to changing power demands via solid-state components of the converter.

To the extent not already described, the different features and structures of the various aspects can be used in combination with each other as desired. That one feature is not illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

The various features of the different aspects can be mixed and matched as desired to form new aspects, whether or not the new aspects are expressly described. Combinations or permutations of features described herein are covered by this disclosure.

## Claims

1. An electric machine (14), comprising:
a housing (30) at least partially defining a chamber (70);
a rotor (32) disposed in the housing (30); and
an impeller (140) disposed at least partially in the chamber (70) and coupled with the rotor (32).

2. The electric machine (14) of claim 1, wherein the housing at least partially defines a first fluid passage (54) and a second fluid passage (60), the second fluid passage (60) fluidly coupled with the chamber (70);
wherein the rotor has a third fluid passage (84) fluidly coupled with the chamber (70); and
wherein the electric machine further comprises:
a first nozzle (110) coupled with the housing (30) and fluidly coupled with the first fluid passage (54);
a first outlet (52) defined by the first nozzle (110);
a first inlet (50) fluidly coupled with the first fluid passage (54);
a second inlet (56) and a second outlet (58) fluidly coupled with the second fluid passage (60); and
a second nozzle (112) coupled with the rotor (32), at least partially aligned with the first nozzle (110), and defining a third inlet (80) fluidly coupled with the third fluid passage (84);
wherein the first nozzle (110) is fluidly coupled with the second nozzle (112) via a non-contact interface.

3. The electric machine (14) of claim 2, wherein the first nozzle (110) and the second nozzle (112) partially overlap in a radial direction.

4. The electric machine (14) of claim 3 or 4, wherein the first nozzle (110) and the impeller (140) partially overlap in the radial direction.

5. The electric machine (14) of any of claims 2 to 4, wherein the first nozzle (110) includes a converging configuration; and
wherein the second nozzle (112) includes a converging-diverging configuration.

6. The electric machine (14) of any of claims 2 to 5, wherein the second nozzle (112) includes a sleeve (120) disposed at least partially in the chamber (70); and
a portion of the first nozzle (110) is disposed in the sleeve (120).

7. The electric machine (14) of claim 6, wherein the impeller (140) includes a set of blades extending from an outer surface of the sleeve (120) and disposed in the chamber (70).

8. The electric machine (14) of any preceding claim, wherein the housing at least partially defines a first fluid passage (54) and a second fluid passage (60), the second fluid passage (60) fluidly coupled with the chamber (70);
wherein the rotor has a third fluid passage (84) fluidly coupled with the chamber (70); and
wherein a fluid path extends through the first fluid passage (54) to the third fluid passage (84), through the third fluid passage (84) to the chamber (70), from the chamber (70) to the second fluid passage (60), and from the second fluid passage (60) to an exterior of the housing (30).

9. The electric machine (14) of claim 8, wherein the rotor (32) includes a rectifier disposed in or adjacent to the third fluid passage (84).

10. The electric machine (14) of claim 9, further comprising a plurality of coils disposed in the housing (30);
wherein the first fluid passage (54) extends adjacent to the plurality of coils.

11. The electric machine (14) of any preceding claim, wherein the housing at least partially defines a first fluid passage (54) and a second fluid passage (60), the second fluid passage (60) fluidly coupled with the chamber (70);
wherein the rotor has a third fluid passage (84) fluidly coupled with the chamber (70); and
wherein the electric machine (14) further comprises:
a first inlet (50) and a first outlet (52) fluidly coupled with the first fluid passage (54);
a second inlet (56) and a second outlet (58) fluidly coupled with the second fluid passage (60); and
a third inlet (80) and a third outlet (82) fluidly coupled with the third fluid passage (84);
wherein the rotor (32) includes a rotor (32) shaft and a rotor (32) body coupled to the rotor (32) shaft;
wherein the third fluid passage (84) includes a first portion (100), a second portion (102), and a third portion (104);
wherein the first portion (100) extends from the third inlet (80) through the rotor (32) shaft to the second portion (102);
wherein the second portion (102) extends through the rotor (32) body to the third portion (104); and
wherein the third portion (104) extends from the second portion (102) through the rotor (32) shaft to the third outlet (82).

12. The electric machine (14) of claim 11, wherein the third portion (104) is disposed radially outward of the first portion (100).

13. The electric machine (14) of claim 11 or 12, wherein the impeller (140) includes a plurality of circumferentially spaced blades; and
wherein the third outlet (82) is disposed between an adjacent pair of the plurality of circumferentially spaced blades.

14. The electric machine (14) of claim 13, wherein the impeller (140) is mounted on or integrally formed with the rotor (32) shaft; and
the impeller (140) is configured to push fluid into the second inlet (56) and through the second fluid passage (60) to an exterior of the housing (30).

15. The electric machine (14) of any preceding claim, wherein the housing (30) is devoid of a pump (214).
